# EUROPÄISCHE PATENTSCHRIFT

(11) **EP 2 895 631 B1**
(45) Veröffentlichungstag und Bekanntmachung des Hinweises auf die Patenterteilung: **18.07.2018**
(21) Anmeldenummer: 13765312.7
(22) Anmeldetag: 10.09.2013
(51) Int. Cl.: C21B 13/00, C01B 3/02, C25B 1/04, C21B 13/14, C22C 37/00, C22C 38/00

(54) **VERFAHREN ZUM ERZEUGEN VON STAHL MIT REGENERATIVER ENERGIE**
METHOD FOR PRODUCING STEEL WITH REGENERATIVE ENERGY
PROCÉDÉ DE PRODUCTION D'ACIER AVEC ENERGIE REGENERATIVE

(30) Priorität: 14.09.2012 DE 102012108631; 28.09.2012 DE 102012109284; 19.04.2013 DE 102013104002
(43) Veröffentlichungstag der Anmeldung: 22.07.2015
(73) Patentinhaber: Voestalpine Stahl GmbH, 4020 Linz (AT)
(72) Erfinder: SCHWAB, Peter, A-4020 Linz (AT); EDER, Wolfgang, A-4020 Linz (AT); BÜRGLER, Thomas, A-4221 Steyregg (AT)
(74) Vertreter: Patronus IP Patent- und Rechtsanwälte
(86) Internationale Anmeldenummer: PCT/EP2013/068726
(87) Internationale Veröffentlichungsnummer: WO 2014/040989

(56) Entgegenhaltungen:
- WO-A1-00/49184
- WO-A1-2011/159334
- WO-A2-2011/116141
- CN-A- 101 975 141
- CN-A- 102 424 873
- DE-A1- 3 317 701
- DE-A1- 19 714 512
- DE-C1- 19 838 368
- GB-A- 846 284
- GB-A- 2 001 671
- US-A- 2 609 288
- US-A- 4 054 444
- US-A- 5 454 853
- US-A1- 2009 249 922
- M Kundak ET AL: "CO 2 EMISSIONS IN THE STEEL INDUSTRY INTRODUCTION", , 1 July 2009 (2009-07-01), XP055385643, Retrieved from the Internet: URL:http://hrcak.srce.hr/file/56088 [retrieved on 2017-06-27]
- Longbottom, R.J. e.a.: "Iron ore reduction with CO and H2 gas mixtures -Thermodynamic and kinetic modelling", , 2008, Retrieved from the Internet: URL:http://ro.uow.edu.au/engpaper/1260
- GROBLER,F. E.A.: "The increasing role of direct reduced iron in global steelmaking", THE JOURNAL OF THE SOUTH AFRICAN INSTITUTE OF MINING AND METALLURGY, March 1999 (1999-03),

## Beschreibung

Die Erfindung betrifft ein Verfahren zum Erzeugen von Stahl nach Anspruch 1. Die Stahlerzeugung wird zur Zeit auf unterschiedliche Arten vorgenommen. Die klassische Stahlerzeugung erfolgt über die Erzeugung von Roheisen im Hochofenprozess aus vorwiegend oxidischen Eisenträgern. Bei diesem Verfahren werden ca. 450 bis 600 kg Reduktionsmittel, zumeist Koks, pro Tonne Roheisen verbraucht, wobei dieses Verfahren sowohl bei der Erzeugung von Koks aus Kohle als auch bei der Erzeugung des Roheisens ganz erhebliche Mengen CO₂ freisetzt. Zudem sind sogenannte "Direktreduktionsverfahren" bekannt (Verfahren entsprechend der Marken, MIDREX, FINMET, ENERGIRON/HYL,etc.), bei denen aus vorwiegend oxidischen Eisenträgern der Eisenschwamm in der Form von HDRI (Hot Direct Reduced Iron), CDRI (Cold Direct Reduced Iron) bzw. sogenanntes HBI (hot briquetted iron) erzeugt wird.

Zudem gibt es noch sogenannte Schmelzreduktionsverfahren, bei denen der Schmelzprozess, die Reduktionsgaserzeugung und die Direktreduktion miteinander kombiniert werden, beispielsweise Verfahren der Marken COREX, FINEX, HiSmelt oder HiSarna. Eisenschwamm in der Form von HDRI , CDRI bzw. HBI werden üblicherweise in Elektroöfen weiter verarbeitet, was außerordentlich energieintensiv ist. Die Direktreduktion wird mittels Wasserstoff und Kohlenstoffmonoxid aus Methan und ggf. Synthesegas vorgenommen. Beispielsweise wird beim sogenannten MIDREX-Verfahren zunächst Methan entsprechend der folgenden Reaktion umgesetzt:

CH₄ + CO₂ = 2CO + 2H₂

und das Eisenoxid reagiert mit dem Reduktionsgas beispielsweise nach:

Fe₂O₃ + 6CO(H₂) = 2Fe + 3CO₂ (H₂O) + 3 CO(H₂).

Auch dieses Verfahren stößt somit CO₂ aus.

Aus der DE 198 53 747 C1 ist ein kombinierter Prozess zur Direktreduktion von Feinerzen bekannt, wobei die Reduktion mit Wasserstoff oder einem anderen Reduktionsgas in einer liegenden Wirbelschicht erfolgen soll.

Aus der DE 197 14 512 A1 ist eine Kraftwerksanlage mit Solargewinnung, Elektrolyseeinrichtung und einem industriellen Metallurgieprozess bekannt, wobei dieser industrielle Prozess entweder die stromintensive Metallherstellung von Aluminium aus Bauxit betrifft oder ein Metallurgieprozess mit Wasserstoff als Reduktionsmittel bei der Herstellung von nichtheißen Metallen wie Wolfram, Molybdän, Nickel oder dergleichen oder ein Metallurgieprozess mit Wasserstoff als Reduktionsmittel unter Anwendung des Direktreduktionsverfahren bei der Herstellung von Eisenmetallen sein soll. Dies wird in dieser Schrift jedoch nicht weiter ausgeführt.

Aus der WO 2011/018124 sind Verfahren und Anlagen zum Bereitstellen speicherbaren und transportablen kohlenstoffbasierter Energieträger unter Einsatz von Kohlendioxid und unter Einsatz von regenerativer elektrischer Energie und von fossilen Brennstoffen bekannt. Hierbei werden ein Anteil von regenerativ erzeugtem Methanol und ein Anteil von Methanol bereitgestellt, der mittels nicht regenerativer elektrischer Energie und/oder mittels Direktreduktion und/oder über partielle Oxidation und/oder Reformierung erzeugt wird. Die Dokumente WO2011/116141, US2009/0249922, CN102424873 und US5454853 offenbaren allen ein Verfahren nach dem Oberbegriff des Anspruchs 1, wobei Eisenerz mit Wasserstoff reduziert wird und das so gewonnene Zwischenprodukt aus reduziertem Eisenerz metallurgisch weiterverarbeitet wird, wobei der Wasserstoff durch Elektrolyse von Wasser erzeugt ist, wobei die zur Elektrolyse notwendige elektrische Energie regenerative Energie ist, welche aus Wasserkraft und/oder Windkraft und/oder Fotovoltaik oder anderen regenerativen Energieformen stammt. Bei allen bislang bekannten Verfahren zur Stahlherstellung ist von Nachteil, dass ein nachhaltiges, und umfassendes Herstellungskonzept auf Basis regenerativer Ressourcen für die Stahlherstellung im industriellen Maßstab fehlt.
Aufgabe der Erfindung ist es ein Verfahren zu schaffen, mit dem Roheisen insbesondere Stahl CO2-neutral im industriellen Maßstab hergestellt werden kann.
Die Aufgabe wird mit einem Verfahren mit den Merkmalen des Anspruchs 1 gelöst. Vorteilhafte Weiterbildungen sind in Unteransprüchen gekennzeichnet.
Erfindungsgemäß wird bei einem Verfahren zur Herstellung von Stahl Eisenerz mit Wasserstoff reduziert und das so gewonnene Zwischenprodukt aus reduziertem Eisenerz und gegebenenfalls Begleitstoffen metallurgisch weiterverarbeitet wird, der Wasserstoff durch Elektrolyse von Wasser erzeugt ist, wobei die zur Elektrolyse notwendige elektrische Energie regenerative Energie ist, welche aus Wasserkraft und/oder Windkraft und/oder Fotovoltaik oder anderen regenerativen Energieformen stammt und wobei der Wasserstoff und/oder das Zwischenprodukt unabhängig von der momentanen Nachfrage immer dann erzeugt wird, wenn ausreichend regenerativ erzeugte elektrische Energie vorhanden ist, wobei nicht nachgefragtes Zwischenprodukt bis zur Nachfrage/Verwendung gelagert wird, so dass auch die regenerative Energie, die darin gespeichert ist, gelagert wird, dadurch gekennzeichnet, daß bei der Reduktion des Eisenerzes zum Zwischenprodukt, dem Wasserstoff ein kohlenstoff- bzw. wasserstoffhältiges Gas zugesetzt wird, um Kohlenstoff im Zwischenprodukt einzubauen und dass dem Wasserstoff zur Reduktion mindestens so viel kohlenstoff- bzw. wasserstoffhältiges Gas zugesetzt wird, dass der Kohlenstoffgehalt im Zwischenprodukt 0,0005 Masse-% bis 6,3 Masse-% beträgt, wobei das kohlenstoff- bzw. wasserstoffhältige Gas, Methan oder andere Kohlenstoffträgergase Gase aus der Biogaserzeugung oder Pyrolyse nachwachsender Rohstoffe oder Synthesegas aus Biomasse sind.

Das erfindungsgemäße Verfahren sieht vor, aus Wind-, Wasser- oder Sonnenenergie erzeugte elektrische Energie dafür zu nutzen, Wasserstoff aus Wasser im Wege der Elektrolyse zu erzeugen. Vorzugsweise am Ort der Erzeugung des Wasserstoffs wird eine Direktreduktionsanlage betrieben, in der - ebenfalls bevorzugt mit derart erzeugter elektrischer Energie - aufbereitete Eisenerze reduziert werden. Das so gewonnene Zwischenproduktstellt einen idealen Speicher dieser regenerativen Energie dar und kann bis zu seiner Weiterverarbeitung gelagert werden und ist jeder Form des Transports zu einer weiterverarbeitenden Einrichtung zugänglich, insbesondere wenn es dort benötigt wird. Insbesondere kann dieses Zwischenprodukt am Ort seiner Entstehung dann in großen Mengen, die den momentanen Bedarf übersteigen, hergestellt werden, wenn die entsprechende elektrische Energie ausreichend zur Verfügung steht. Steht diese Energie nicht zur Verfügung, sind ausreichende Mengen des Zwischenprodukts und damit auch der Energie vorhanden, um den Bedarf erfüllen zu können.

Durch das Betreiben eines entsprechenden Elektrolichtbogens, ebenfalls vorzugsweise insbesondere vollständig mit Energie aus Wind-, Wasser- oder Solarenergie, gelingt es, eine CO₂-freie Stahlerzeugung zu verwirklichen und zudem regenerative Energie zu speichern. Alternativ kann das Zwischenprodukt auch im Hochofen bzw. LD-Verfahren eingesetzt werden.

Erfindungsgemäß kann der Wasserstoff aus den regenerativen Prozessen mit kohlenstoff- bzw. wasserstoffhältigen Gasströmen wie beispielsweise CH4, in einer Direktreduktionsanlage eingesetzt werden. Das Verhältnis zwischen Wasserstoff aus den regenerativen Prozessen zu kohlenstoff- bzw. wasserstoffhältigen Gasströmen kann je nach Verfügbarkeit kontinuierlich variiert werden. Beispielsweise wird bei Vorliegen von sehr viel Wasserstoff dieses zu fast 100 % für die Direktreduktion verwendet. Den Rest bildet der minimal notwendige kohlenstoff- bzw. wasserstoffhältigen Gasstrom für die Einstellung des Kohlenstoffanteils. Im Bedarfsfall kann aber auch auf reine kohlenstoff- bzw. wasserstoffhältige Gasströme (Biogas, Gas aus Pyrolyse nachwachsender Rohstoffe) umgestellt werden.

Bevorzugt wird jedoch das Verfahren so betrieben, dass mittels regenerativer Energie bei deren Vorhandensein so viel Wasserstoff erzeugt wird, wie es die vorhandene Energie zulässt und diesen Wasserstoff für die Direktreduktion zu verwenden. Als kohlenstoff- bzw. wasserstoffhältige Gasströme kommen erfindungsgemäß Gasströme aus der Biogaserzeugung und der Pyrolyse nachwachsender Rohstoffe in Frage.

Überschüssiger Wasserstoff, welche nicht unmittelbar verbraucht werden kann, kann zwischengespeichert werden.
Diese Zwischenspeicherung des Wasserstoffs kann beispielsweise in einem Gasometer verwendet werden und die Einstellung der Gehalte an kohlenstoff- bzw. wasserstoffhältigen Gasströmen kann über eine Prognosesteuerung erfolgen. Diese Prognosesteuerung kann den prognostizierten Anfall/Erzeugungsmenge von Wasserstoff bzw. regenerativer Energie messen, des Weiteren aber auch beispielsweise Wettervorhersagen um die Erzeugungsmenge an regenerativer Energie abschätzen zu können. Darüber hinaus kann in diese Prognosesteuerung auch Bedarfsvorhersagen anderer externer Verbraucher einfließen, damit die erzeugte elektrische Energie aus regenerativen Quellen optimal am wirtschaftlich sinnvollsten eingesetzt wird.

Die hierbei herrschenden Temperaturen des Gasstromes werden durch Erwärmung mittels beispielsweise Reformer, Heater oder partielle Oxidation auf 450°C bis 1200°C, bevorzugt 600°C bis 1200°C insbesondere 700°C bis 900°C eingestellt und dann in den Direktreduktionsprozess eingeführt, um dort eine chemische Reaktion durchzuführen. Auch der Gasstrom, welcher den Direktreduktionsprozess verlässt, kann in den Prozess als kohlenstoff- bzw. wasserstoffhältiger Gasstromrückgeführt werden.

Die sich hieraus ergebenden möglichen erfindungsgemäßen Zwischenprodukte sind HBI, HDRI oder CDRI.

Hierbei werden Überdrücke von 0 bar bis 15 bar eingestellt.. Beispielsweise sind Überdrücke von ca. 1,5 bar beim MIDREX Verfahren und etwa 9 bar bei Energiron bevorzugt.

Bei der Vermischung des regenerativ erzeugten Wasserstoffs mit kohlenstoff- bzw. wasserstoffhältigen Gasströmen, kann der Kohlenstoffgehalt idealerweise eingestellt werden, und zwar auf 0,0005 % bis 6,3 %, bevorzugt 1 % bis 3 % und direkt als C oder Fe₃C im Zwischenprodukt eingebaut sein. Ein solches Zwischenprodukt ist im Kohlenstoffgehalt ideal eingestellt und besonders gut zur Weiterverarbeitung geeignet da es den notwendigen Kohlenstoffgehalt für den metallurgischen Prozess beisteuert.

Die Erfindung wird beispielhaft anhand einer Zeichnung erläutert. Es zeigen hierbei:
Figur 1 das erfindungsgemäße Verfahren in einer beispielhaften Ausführungsform (Elektrolichtbogenofen) im Überblick;
Figur 2 das erfindungsgemäße Verfahren in einer zweiten beispielhaften Ausführungsform (LD-Verfahren) im Überblick;

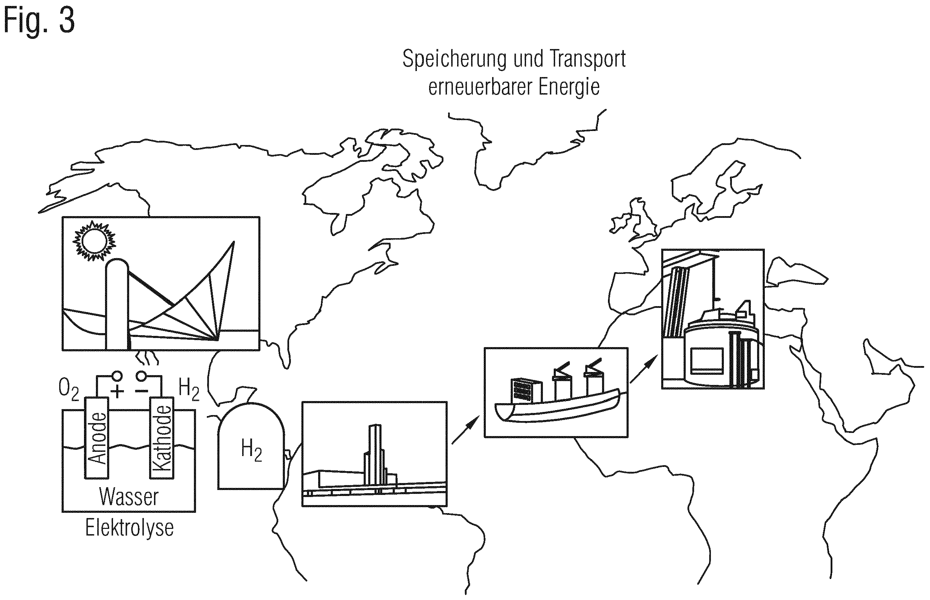

Figur 3 die Stoff- und Energieströme schematisch.

Erfindungsgemäß erfolgt die Reduktion der vorwiegend oxidischen Eisenträger über Wasserstoff und gegebenenfalls als Kohlenstoffträger oder Methan aus regenerativen Prozessen wie der Biogaserzeugung.

Die Eisenerzreduktion kann bekannterweise in drei Möglichkeiten erfolgen:
- "klassischer" Hochofen Prozess - Erzeugung Roheisen aus Eisenträgern und Reduktionsmittel, vor allem Koks
- Direktreduktion - beispielsweise MIDREX - Eisenschwamm (HDRI, CDRI und HBI -,
- Schmelzreduktion - Kombination von Schmelzprozess, Reduktionsgaserzeugung und Direktreduktion beispielsweise COREX oder FINEX.

Eisenerzreduktion (Hämatit, Eisen(III)-Oxid erfolgt durch:
Kohlenmonoxid:

   Fe₂O₃ + 6CO → 2Fe + 3CO + 3CO₂
Wasserstoff:

   Fe₂O₃ + 6H2 → 2Fe + 3H₂ + 3H₂O

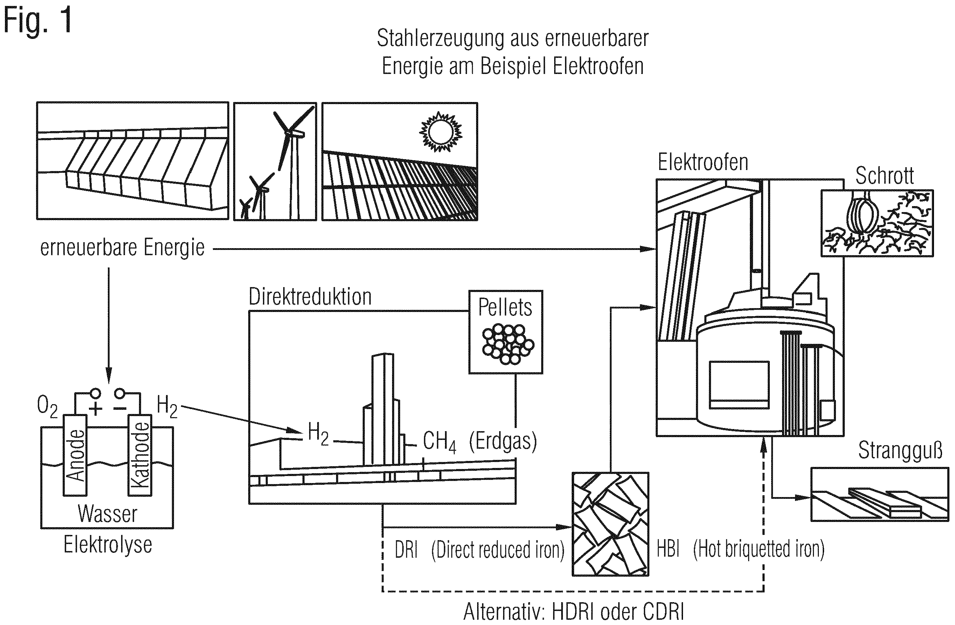

Das im Direktreduktionsverfahren gewonnene Zwischenprodukt kann hierbei sogenanntes DRI (direct reduced iron) oder HBI (hot briquetted iron) sein, welches entsprechend Figur 1 im Elektrolichtbogenofen ggf. unter Zugabe von Schrott zu Stahl verhüttet werden kann.

Figur 1 zeigt des Weiteren, dass HDRI bzw. CDRI auch ohne den "Umweg" der HBI-Herstellung direkt in den Elektroofen geführt werden können.

Erfindungsgemäß kann HBI auch in anderen metallurgischen Prozessen außer dem Elektrolichtbogenofen wie z.B. im Hochofenprozess oder als Schrottersatz im LD-Verfahren eingesetzt werden.

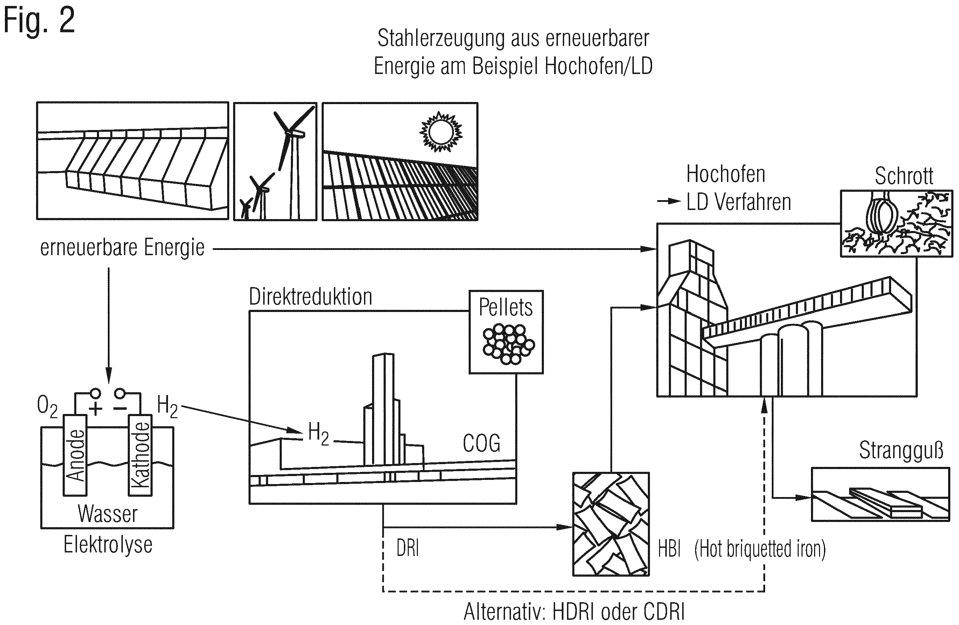

Eine solche Ausführungsform wird in Figur 2 dargestellt. Hierbei kann noch erwähnt werden, dass CDRI bzw. HDRI auch direkt dem Hochofenprozess bzw. LD-Verfahren zugeführt werden können.

In einer bevorzugten Ausführungsform kann zum Ausgleich von kurzfristigen Schwankungen bei der Erzeugung der erneuerbaren Energie diese in Form von Wasserstoff gespeichert werden, wenn diese im Überschuss vorhanden ist. Diese Speicherung kann beispielsweise in einem Gasometer erfolgen. Ein solcher Speicher wird dann bei Schwankungen genützt. Kurzfristige Schwankungen können vorhersehbar z.B. bei Solaranlagen in der Nacht oder unvorhersehbar wie z.B. Windstärkenschwankungen bei Windkraftanlagen auftreten.

Längerfristige Schwankungen welche unter anderem durch die unterschiedlichen Jahreszeiten sich ergeben können, können bevorzugt in die Energiespeicherung in Form von HBI erfolgen.

Auch kann im Bedarfsfall auf den Einsatz von kohlenstoff- bzw. wasserstoffhältigen Gasen wie beispielsweise Erdgas zurückge-Vorteilhafterweise ergeben sich daraus die optimalen Einsatzmöglichkeiten der regenerativen Energie, da diese kontinuierlich je nach Verfügbarkeit der entsprechenden Energieform eingesetzt werden kann und die fehlende Restenergie durch andere Energieträger im Bedarfsfall ergänzt werden kann. Dadurch kann die Emission von CO2 jederzeit auf das in diesem Moment mögliche Minimum durch die Nutzung regenerativer Energiequellen reduziert werden.

Ein weiterer Vorteil der Erfindung liegt in der räumlichen Entkopplung der Orte der Herstellung der regenerativen Energie und der Nutzung dieser Energie. Beispielsweise werden Solaranlagen eher in sonnenbegünstigten, wärmeren Gegenden mit viel Platz errichtet, wohingegen Stahlwerke oftmals in der Nähe von Flüssen oder Meeren zu finden sind.
Da die produzierte Energie beispielsweise in HBI gespeichert vorliegt ist diese leicht und effizient zu transportieren.

## Patentansprüche

1. Verfahren zum Erzeugen von Stahl, wobei Eisenerz mit Wasserstoff reduziert und das so gewonnene Zwischenprodukt aus reduziertem Eisenerz und gegebenenfalls Begleitstoffen metallurgisch weiterverarbeitet wird, der Wasserstoff durch Elektrolyse von Wasser erzeugt ist, wobei die zur Elektrolyse notwendige elektrische Energie regenerative Energie ist, welche aus Wasserkraft und/oder Windkraft und/oder Fotovoltaik oder anderen regenerativen Energieformen stammt und wobei
- der Wasserstoff und/oder das Zwischenprodukt unabhängig von der momentanen Nachfrage immer dann erzeugt wird, wenn ausreichend regenerativ erzeugte elektrische Energie vorhanden ist, wobei nicht nachgefragtes Zwischenprodukt bis zur Nachfrage/Verwendung gelagert wird, so dass auch die regenerative Energie, die darin gespeichert ist, gelagert wird, **dadurch gekennzeichnet, daß** bei der Reduktion des Eisenerzes zum Zwischenprodukt, dem Wasserstoff ein kohlenstoff- bzw. wasserstoffhältiges Gas zugesetzt wird, um Kohlenstoff im Zwischenprodukt einzubauen und dass dem Wasserstoff zur Reduktion mindestens so viel kohlenstoff- bzw. wasserstoffhältiges Gas zugesetzt wird, dass der Kohlenstoffgehalt im Zwischenprodukt 0,0005 Masse-% bis 6,3 Masse-% beträgt, wobei
- das kohlenstoff- bzw. wasserstoffhältige Gas, Methan oder andere Kohlenstoffträgergase Gase aus der Biogaserzeugung oder Pyrolyse nachwachsender Rohstoffe oder Synthesegas aus Biomasse sind.

2. Verfahren nach einem der vorhergehenden Ansprüche, **dadurch gekennzeichnet, dass** dem Wasserstoff zur Reduktion mindestens so viel kohlenstoff- bzw. wasserstoffhältiges Gaszugesetzt wird, dass der Kohlenstoffgehalt im Zwischenprodukt 1 Masse-% bis 3 Masse-% beträgt.

3. Verfahren nach einem der vorhergehenden Ansprüche, **dadurch gekennzeichnet, dass** das Reduktionsgas aus Wasserstoff und gegebenenfalls Kohlenstoffträgergas mit 450°C bis 1200°C, bevorzugt 600°C bis 1200°C insbesondere 700°C bis 900°C in den Reduktionsprozess eingeführt wird.

4. Verfahren nach einem der vorhergehenden Ansprüche, **dadurch gekennzeichnet, dass** der Überdruck bei der Reduktion zwischen 0 bar und 15 bar beträgt.

5. Verfahren nach einem der vorhergehenden Ansprüche, **dadurch gekennzeichnet, dass** das Verhältnis zwischen Wasserstoff aus regenerativer Herstellung und kohlenstoff- bzw. wasserstoffhältigen Gasströmen nach Verfügbarkeit kontinuierlich variiert wird, wobei bei ausreichenden regenerativen Energie Wasserstoff aus der Erzeugung mit regenerativer Energie eingesetzt wird und beim Ausbleiben von regenerativer Energie auf rein kohlenstoff- bzw. wasserstoffhältige Gasströme umgestellt wird.

6. Verfahren nach einem der vorhergehenden Ansprüche, **dadurch gekennzeichnet, dass** die Einstellung der Gehalte an Wasserstoff und/oder kohlenstoff- bzw. wasserstoffhältigen Gasströmen im Gesamtgasstrom über eine Prognosesteuerung erfolgt, wobei mit der Prognosesteuerung der prognostizierte Anfall/Erzeugungsmenge von Wasserstoff und/oder regenerativer Energie und/oder kohlenstoff- bzw. wasserstoffhältigen Gasströmenaus der Biogaserzeugung oder der Pyrloyse von nachwachsenden Rohstoffen gemessen wird und/oder Wettervorhersagen in die Abschätzung regenerativer Energie einfließen, wobei auch Bedarfsvorhersagen anderer externer Verbraucher einfließen wodurch die elektrische Energie aus regenerativen Quellen optimal und am wirtschaftlichsten verteilt werden kann.

7. Verfahren nach einem der vorhergehenden Ansprüche, **dadurch gekennzeichnet, dass** der Gasstrom, der von der Direktreduktionsanlage als Abgas emittiert wird in den Prozess als kohlenstoff- bzw. wasserstoffhältiger Gasstrom geführt wird.

## Claims

1. Process for the production of steel, wherein iron ore is reduced with hydrogen and the so obtained intermediate of reduced iron ore and eventually accompanying substances is metallurgically treated,
the hydrogen is produced by electrolysis of water, wherein the energy necessary for the electrolysis is regenerative energy which stems from hydrological power and / or wind power and / or photovoltaic or other regenerative energy forms and wherein
- the hydrogen and/or the intermediate independently of the actual demand are always produced, when sufficient electrical energy produced by Rachael Ray to have means is present, wherein
on demanded intermediate is stocked until demand/news, so that the original rate of energy, which is stocked at therein, is stocked, **characterised in that** during the reduction of the iron ore to intermediate carbon or hydrogen -containing gas is added to the hydrogen, in order to introduce carbon into the intermediate and
**in that** at least so much carbon or hydrogen containing gas is added to the hydrogen for the reduction, that the carbon content in the intermediate is 0.0005 mass-% to 6.3 mass-%, wherein
- the carbon or hydrogen containing gas is methane or other carbon carrying gases, gases from biogas production or from paralysis of regenerative raw materials or synthesis gas from biomass.

2. Process according to one of the preceding claims, **characterised in that** at least so much carbon for hydrogen containing gas is added to the hydrogen for the reduction, that the carbon content of the intermediate is 1 mass-% to 3 mass-%.

3. Process according to one of the preceding claims, **characterised in that** the reduction g consisting of hydrogen and eventually carbon carrying gas is introduced with 400°C to 1200°C, preferably 600°C to 1200°C, particularly 700°C to 900°C into the reduction process.

4. Process according to one of the preceding claims, **characterised in that** the overpressure is between 0 bar and 15 bar.

5. Process according to one of the preceding claims, **characterised in that** the ratio between hydrogen of regenerative fabrication and of carbon or hydrogen containing gas fluxes is being the ride continually depending on the disposability, therein, if there is sufficient regenerative energy, hydrogen from the production with regenerative energy is employed, and if there is no regenerative energy, it is switched exclusively to carbon or hydrogen containing gas fluxes.

6. Process according to one of the preceding claims, **characterised in that** the adjustment of the content of hydrogen and/or carbon or hydrogen containing gas fluxes in the total gas flux is effected by means of a prognosis control, wherein by means of the prognosis control the prognostic amount/production amount of hydrogen and/or regenerative energy and/or carbon or hydrogen containing gas fluxes from biogas production or the pyrolysis of regenerated raw materials is measured and/or weather forecasts enter into the estimate of regenerative energy, wherein also forecasts relating to the need of other external consumers enter, whereby electrical energy from regenerative sources can be distributed optimally and most economically.

7. Process according to one of the preceding claims, **characterised in that** the gas flux which is emitted from the direct reduction system as emission is guided into the process as carbon or hydrogen containing gas flux.

## Revendications

1. Procédé de fabrication d'acier, dans lequel du minéral de fer est réduit avec de l'hydrogène et dans lequel le produit intermédiaire de minéral de fer réduit et éventuellement de substances associés ainsi obtenu est traité métallurgique ment,
l'hydrogène est fabriqué par électrolyse, dans lequel l'énergie électrique nécessaire pour l'électrolyse est une énergie régénératrice, qui provient d'énergie hydraulique et / ou d'énergie éolienne et / ou photovoltaïque ou d'autres formes d'énergies régénératrices et dans lequel
- l'hydrogène et / ou le produit intermédiaire sont produits indépendamment du besoin actuel et toujours, quand assez d'énergie électrique fabriquée de manière régénératrice est présente, dans lequel du produit intermédiaire non nécessité est stocké jusqu'à la demande / au besoin, de façon à ce que l'énergie régénératrice, qui est stocké là-dedans, et stockée,
caractérisé en en ce que
durant la réduction du minéral de fer pour donner les produits intermédiaires un gaz contenant du carbone ou de l'hydrogène est ajouté à l'hydrogène, afin d'incorporer du carbone dans le produit intermédiaire, et
en ce que, pour la réduction, au moins autant de gaz contenant du carbone ou de l'hydrogène est ajouté à l'hydrogène, que la teneur en carbone dans le produit intermédiaire vaut 0,0005 % en poids à 6,3 % en poids, dans lequel
- le gaz contenant du carbone ou de l'hydrogène est du méthane ou d'autres gaz porteurs de carbone, des gaz provenant de la fabrication de biogaz ou de la pyrolyse de matières premières ou des gaz de synthèse à partir de biomasse.

2. Procédé selon l'une quelconque des revendications précédentes, **caractérisé en ce que**, au moins autant de gaz contenant du carbone ou de l'hydrogène est ajouté à l'hydrogène pour la réduction, que la teneur en carbone du produit intermédiaire est de 1 % en poids à 3 % en poids.

3. Procédé selon l'une des revendications précédentes, **caractérisé en ce que** le gaz de réduction d'hydrogène et éventuellement de gaz porteurs de carbone est introduit dans le procédé de réduction avec 450 °C à 1200 °C, de préférence 600 °C à 1200 °C, particulièrement 700 °C à 900 °C.

4. Procédé selon l'une quelconque des revendications précédentes, **caractérisé en ce que** la surpression durant la réduction comporte entre 0 bar et 15 bar.

5. Procédé selon l'une quelconque des revendications précédentes, **caractérisé en ce que** le rapport entre l'hydrogène de fabrication régénératrice et de flux de gaz contenant du carbone ou de l'hydrogène est continuellement varié en dépendance de la disponibilité, dans lequel, quand il y a suffisamment d'énergie régénératrice, de l'hydrogène de la fabrication avec de l'énergie régénératrice et employé, et quand il n'y a pas d'énergie régénératrice, on passe exclusivement sur des flux de gaz contenant du carbone ou de l'hydrogène.

6. Procédé selon l'une quelconque des revendications précédentes, **caractérisé en ce que** l'ajustement des teneurs en hydrogène et ou en flux de gaz contenant du carbone et / ou de l'hydrogène dans le flux de gaz total est effectué par le moyen d'un contrôle pronostique, dans lequel, par le moyen du contrôle pronostique, la quantité / quantité produite d'hydrogène et / ou d'énergie régénératrice et / ou de flux de gaz contenant du carbone ou de l'hydrogène provenant de la fabrication de biogaz ou de la pyrolyse de matières premières régénératrices est / sont mesuré(s) et / ou des prévisions météorologiques rentrent dans l'estimation d'énergie régénératrice, dans lequel aussi les prévisions de besoins d'autres consommateurs rentrent, par quoi l'énergie électrique provenant de sources régénératrices peut être repartie de façon optimale et le plus économiquement.

7. Procédé selon l'une quelconque des revendications précédentes, **caractérisé en ce que** le flux de gaz qui est émis à partir du dispositif de réduction directe en tant qu'émission est guidé dans le procédé en tant que flux de gaz contenant du carbone ou de l'hydrogène.
